# EUROPÄISCHE PATENTANMELDUNG

(11) **EP 4 509 438 A1**
(43) Veröffentlichungstag der Anmeldung: **19.02.2025**
(21) Anmeldenummer: 24201635.0
(22) Anmeldetag: 20.09.2024
(51) Int. Cl.: B65G 17/12, B65G 17/36, B65G 17/42

(54) **BECHER FÜR EIN GURTBECHERWERK UND GURTBECHERWERK**

(30) Priorität: 20.09.2023 AT 507682023
(71) Anmelder: ATRA Aufbereitungsanlagen- und Transportmittelservice-Gesellschaft m.b.H., 5440 Golling an der Salzach (AT)
(72) Erfinder: WIESER, Rupert, 5440 Scheffau am Tennengebirge (AT); WIESER, Christine, 5440 Scheffau am Tennengebirge (AT)
(74) Vertreter: Beer & Partner Patentanwälte KG

(57) **Zusammenfassung**

Ein Becher (1) für ein Gurtbecherwerk zur Förderung von Schüttgut weist einen Boden (4), eine Rückwand (5), Seitenwände (6) und eine Vorderwand (7) auf. Der Becher (1) ist mittels Schrauben (31) durch Öffnungen (28, 29) an der Rückwand (5) und Löcher (34) in einem Gurt (2) des Gurtbecherwerks mit wenigstens einer Halterung (18) verbunden, die an der der Rückwand (5) gegenüberliegenden Seite des Gurtes (2) angeordnet ist. Zwischen der Rückwand (5) und der Halterung (18) ist ein Abstandhalter angeordnet, der den Abstand zwischen der Rückwand (5) und der Halterung (18) definiert.

## Beschreibung

Die Erfindung betrifft einen Becher für ein Gurtbecherwerk zur Förderung von Schüttgut, der einen Boden, eine Rückwand, Seitenwände und eine Vorderwand aufweist, wobei der Becher mittels Schrauben durch Öffnungen an der Rückwand und Löcher in einem Gurt des Gurtbecherwerks mit wenigstens einer Halterung verbunden ist, die an der der Rückwand gegenüberliegenden Seite des Gurtes angeordnet ist.

Die Erfindung betrifft des Weiteren ein Gurtbecherwerk mit einem Gurt und solchen Bechern.

Ein derartiges Gurtbecherwerk mit Bechern ist beispielsweise aus der FR 2 364 830 A1 bekannt. Da sich zwischen dem Becher und der Halterung elastische Teile wie der Gurt befinden, besteht das Risiko, dass nicht alle Schrauben gleichmäßig fest angezogen werden, womit die Gefahr eines Schieflaufes des Gurtes besteht, weil durch ein ungleichmäßiges Anziehen der Schrauben die gestreckte Gurtlänge ungleich beeinflusst wird.

Der Erfindung liegt daher die Aufgabe zugrunde, einen Becher und ein Gurtbecherwerk zu schaffen, bei dem dieses Risiko nicht besteht.

Gelöst wird diese Aufgabe mit einem Becher mit den Merkmalen des Anspruches 1 und mit einem Gurtbecherwerk mit den Merkmalen des Anspruches 16.

Bevorzugte, aber nicht zwingende Merkmale sind Gegenstand der Unteransprüche.

Erfindungsgemäß ist zwischen der Rückwand des Bechers und der Halterung ein Abstandhalter angeordnet, der den Abstand zwischen der Rückwand des Bechers und der Halterung bestimmt. Damit kann jede Schraube ausreichend fest angezogen und die Gefahr eines Schieflaufes des Gurtes vermieden werden.

Insbesondere tritt das angesprochene Problem auf, wenn der Becher an der Rückwand eine Tragplatte aufweist, die, vorzugsweise allseits, von Kunststoff umhüllt ist, weil dann nicht nur der Gurt, sondern auch die Kunststoffumhüllung zwischen der Halterung und der Tragplatte geklemmt wird. Wenn sich der Abstandhalter erfindungsgemäß an der Tragplatte der Rückwand abstützt, wird weder der Gurt noch der betroffene Abschnitt der Umhüllung ungleichmäßig fest geklemmt, wenn die Schrauben angezogen werden.

In einer besonders bevorzugten Ausführungsform der Erfindung bestehen alle Wände und der Boden des Bechers aus, vorzugsweise elastischem, Kunststoff. Als Kunststoff für Becher zur Förderung von Schüttgut hat sich Polyurethan besonders bewährt, weil dieses bei abrasiven und chemisch aggressiven Schüttgütern verschleißfest und widerstandsfähig ist.

Konstruktiv von Vorteil ist gemäß einer weiteren bevorzugten Ausführungsform der Erfindung, wenn die Tragplatte Teil eines Tragrahmens ist, der sich in der Rückwand, den Seitenwände und der Vorderwand erstreckt. Damit kann die Formstabilität des Bechers insbesondere im Bereich seiner Öffnung verbessert und gleichzeitig eine zuverlässige Montage des Bechers am Gurt ermöglicht werden.

Der Tragrahmen oder Teile davon können bei der Erfindung frei liegen, insbesondere wenn der Tragrahmen oder Teile davon als Verschleißelement Verwendung finden sollen. Besonders bevorzugt ist erfindungsgemäß allerdings, wenn der Tragrahmen allseits von Kunststoff, insbesondere Polyurethan, umhüllt ist, weil dieser Kunststoff wie bereits erwähnt elastisch und sehr verschleißfest sowie widerstandsfähig ist.

In einer weiteren, bevorzugten Ausführungsform der Erfindung weist der Tragrahmen einen U-förmig gebogenen Rahmenteil auf, der sich an oder in den Seitenwänden und der Vorderwand erstreckt, und der mit der Tragplatte verbunden, insbesondere verschweißt, ist. Der U-förmige Rahmenteil ist einfach herzustellen und mit der Tragplatte zu verbinden und die Tragplatte, die die Verbindung zum Gurt darstellt, kann aus einem anderen und insbesondere stabileren Bauteil hergestellt werden.

Die Halterung befindet sich auf der dem Becher gegenüberliegenden Innenfläche des Gurtes und könnte ein unerwünschtes Hindernis beim Auflaufen des Gurtes auf die Umlenkrollen darstellen. Um dies zu vermeiden, kann die Rückwand erfindungsgemäß eine der Erstreckung der Halterung entsprechende Vertiefung aufweisen. Der Gurt und die Halterung können dementsprechend wenigstens zum Teil in dieser Vertiefung aufgenommen werden, womit die Erhebung der Halterung über die Innenfläche des Gurtes verringert oder ganz beseitigt werden kann.

Wenn bei einer Weiterentwicklung dieser Ausführungsform der Erfindung die Halterung und die Tragplatte eine abgerundete Kontur aufweisen, die im Wesentlichen parallel verlaufen, dann wird der Gurt ohne Ecken oder Kanten zwischen der Tragplatte und der Halterung eingeklemmt.

Besonders bevorzugt ist die Halterung leistenförmig, erstreckt sich quer zur Längserstreckung des Gurtes, und weist vorzugsweise eine der Rückwand zugewandte, konvexe Fläche und eine von der Rückwand abgewandte, ebene Fläche auf. Die Becher können dann sehr einfach am Gurt montiert werden und die vorstehend in Verbindung mit der Vertiefung und der abgerundeten Kontur erwähnten Vorteile kommen gut zum Tragen. Um eine Angleichung an die Bombierung der Trommel zu ermöglichen, besteht die leistenförmige Halterung bevorzugt aus zwei oder mehr als zwei Teilen.

Die Demontage verschlissener Becher und insbesondere die Montage neuer Becher an der Halterung soll möglichst einfach und schnell möglich sein, damit die Personalkosten und die Stillstandszeit des Becherwerkes möglichst gering sind. Wenn die Schrauben wie in der FR 2 364 830 A1 von der Seite der Halterung durch den Gurt gesteckt sind, muss die Innenseite des Gurtes bei der Demontage verschlissener Becher und insbesondere bei der Montage neuer Becher zugänglich sein. Dies verkompliziert die Handhabung und verlängert die Montagezeit und die Stillstandszeit des Becherwerkes.

Um die Montage zu vereinfachen und dadurch die dafür erforderliche Zeit zu verkürzen, sind in einer besonders bevorzugten Ausführungsform der Erfindung in der Halterung Hülsen mit einem Innengewinde angeordnet, vorzugsweise an der Halterung befestigt, die den Abstandhalter bilden. Da die Hülsen, die die Muttern für die Schrauben bilden, bereits an der Halterung befestigt sind, müssen sie nicht separat gehalten werden, wenn die Schrauben durch die Rückwand der Becher und den Gurt gesteckt und mit der Halterung verschraubt werden. Außerdem vereinfachen mit der Halterung verbundene Hülsen die Montage, weil es sonst schwieriger ist, die Halterungen mit den Schrauben zu erreichen und die Schrauben von der Innenseite des Bechers her in die Halterungen einzuschrauben. Und da die Hülsen bereits die Abstandhalter bilden, wird die Montage weiter vereinfacht.

Die Hülsen an der Halterung exakt zu positionieren wird erfindungsgemäß dadurch besonders einfach bewerkstelligt, dass die Hülsen in Bohrungen der Halterung aufgenommen sind. Wenn die Hülsen in die Bohrungen eingesetzt werden, sind sie bereits exakt positioniert und können einfach mit der Halterung fest verbunden, insbesondere verschweißt, werden.

Um die Schraubenköpfe vor Verschleiß zu schützen, weist die Rückwand vorzugsweise im Bereich jeder Öffnung eine Ausnehmung auf, in der der Schraubenkopf aufgenommen ist.

Im Stand der Technik sind an der Innenfläche der Rückwand des Bechers üblicherweise Kontermuttern oder andere Sicherungen angebracht, die allerdings eine gewisse Größe aufweisen und daher aus der Vertiefung hervorschauen. Dadurch sind diese auch besonders stark einem Verschleiß und Anbackungen ausgesetzt und oft nur schwer zu lösen.

Die Schraubenköpfe benötigen demgegenüber weniger Platz, sodass die Ausnehmungen zum Schutz des Schraubenkopfes zusätzlich noch mit Stopfen verschlossen werden können. Dadurch entsteht eine glatte, störungsfreie Oberfläche an der Becherinnenseite, die die Förderleistung positiv beeinflusst.

Da zwischen die Becher und den Gurt Schüttgut fallen kann, das auch den Verschleiß des Gurtes erhöhen kann, ist in einer weiteren bevorzugten Ausführungsform der Erfindung in einem oberen Randbereich der Rückwand eine Dichtlippe angeordnet, die vom Becher weg nach oben in Richtung zum Gurt hin gerichtet ist. Die Wirkung der Dichtlippe kann erfindungsgemäß dadurch noch weiter verbessert werden, dass sie elastisch vorgespannt ist und zumindest in gestreckten Abschnitten des Gurtes, vorzugsweise aber immer, am Gurt anliegt.

Wenn die Dichtlippe immer am Gurt anliegt, kann sie auch als Rotationsdämpfer bei der Bewegung der Becher von der Umlenkrolle bzw. Trommel in den gestreckten Bereich des Gurtes fungieren. Damit kann das Risiko von in diesem Bereich immer wieder auftretenden Problemen, insbesondere Beschädigungen, am Gurt verringert werden.

Weitere Merkmale und Vorteile der Erfindung ergeben sich aus der nachfolgenden Beschreibung eines bevorzugten, den Schutzbereich nicht beschränkenden, Ausführungsbeispiels der Erfindung unter Bezugnahme auf die angeschlossenen Zeichnungen. Es zeigt:
- Fig. 1: eine Seitenansicht auf eine Umlenkrolle eines Gurtbecherwerkes mit einem erfindungsgemäßen Becher,
- Fig. 2: einen erfindungsgemäßen Becher in Schrägansicht,

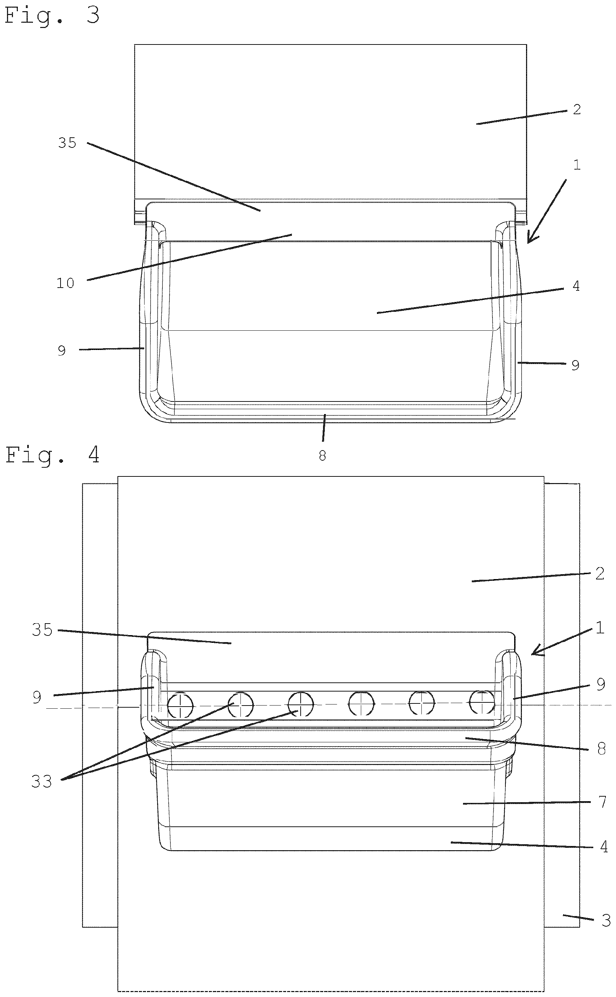

- Fig. 3: eine Ansicht auf Fig. 1 von oben,
- Fig. 4: eine Ansicht auf Fig. 1 von rechts,
- Fig. 5: einen Schnitt durch einen am Gurt montierten Becher,
- Fig. 6: einen Schnitt durch einen Becher im Zuge der Montage an einem Gurt,
- Fig. 7: eine vergrößerte Darstellung des Verbindungsbereichs des Bechers mit dem Gurt, und
- Fig. 8: einen Tragrahmen, der in die Wände des Bechers eingegossen ist.

In den Zeichnungen ist eine Ausführungsform einer erfindungsgemäßen Vorrichtung dargestellt, die aber nur beispielhaft ist und, abgesehen von den erfindungsgemäßen Merkmalen, wie sie in den Ansprüchen definiert sind, im Rahmen der vorliegenden Erfindung bezüglich vieler Komponenten auch anders ausgeführt sein kann, ohne dass dies im Folgenden einer besonderen Erwähnung bedarf.

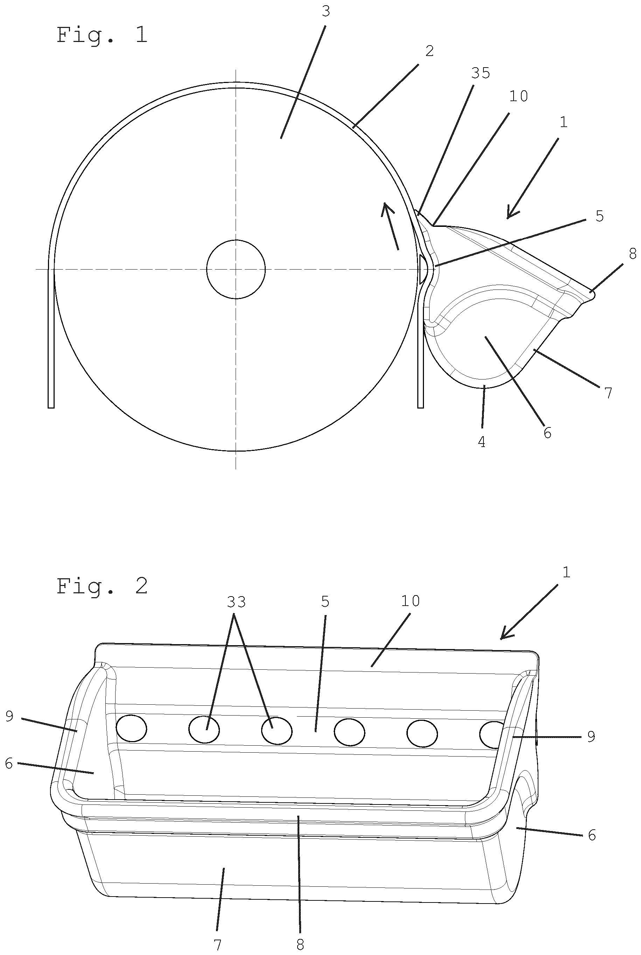

In den Zeichnungen ist ein erfindungsgemäßer Becher 1 dargestellt, der an einem Gurt 2 montiert ist, der über eine obere Umlenkrolle 3 eines erfindungsgemäßen Gurtbecherwerkes läuft. In der dargestellten Ausführungsform der Erfindung ist der Gurt 2 breiter als die Umlenkrolle 3. Normalerweise ist die Umlenkrolle 3 aber immer breiter als der Gurt 2 und der Gurt 2 breiter als der Becher 1. Mit einer Umlenkrolle 3, die breiter als der Gurt 2 ist, kann das seitliche Wandern des Gurtes 2 auf der Umlenkrolle 3 kompensiert werden. In Fig. 1 ist nur ein einziger Becher 1 dargestellt. Am Gurt 2 des Gurtbecherwerkes ist aber üblicherweise - so wie beim erfindungsgemäßen Gurtbecherwerk - eine Vielzahl von entsprechenden Bechern 1 montiert, die in Bewegungsrichtung des Gurtes 2 - je nach konkretem Anwendungsfall - einen mehr oder weniger großen Abstand voneinander aufweisen.

Der erfindungsgemäße Becher 1 weist einen Boden 4, eine Rückwand 5, Seitenwände 6 und eine Vorderwand 7 auf. Mit der Rückwand 5 ist jeder Becher 1 am Gurt 2 montiert.

In einer bevorzugten Ausführungsform der Erfindung sind der Boden 4 und alle Wände 5 bis 7 des Bechers 1 aus elastischem Kunststoff hergestellt, wobei Polyurethan wegen seiner chemischen Widerstandsfähigkeit und Verschleißfestigkeit bevorzugt ist. Andere Kunststoffe oder eine Kombination mit anderen Werkstoffen wie Stahl, bei der einige der Wände oder zumindest Abschnitte von Wänden aus Kunststoff und andere Wände oder Abschnitte von Wänden aus einem anderen Werkstoff bestehen, sind im Rahmen der Erfindung ebenso möglich. Beispielsweise können die oberen Ränder 8, 9 der Wände 6, 7, die Schürfleisten bilden, aus Verschleißelementen bestehen oder mit Verschleißelementen versehen bzw. verstärkt sein.

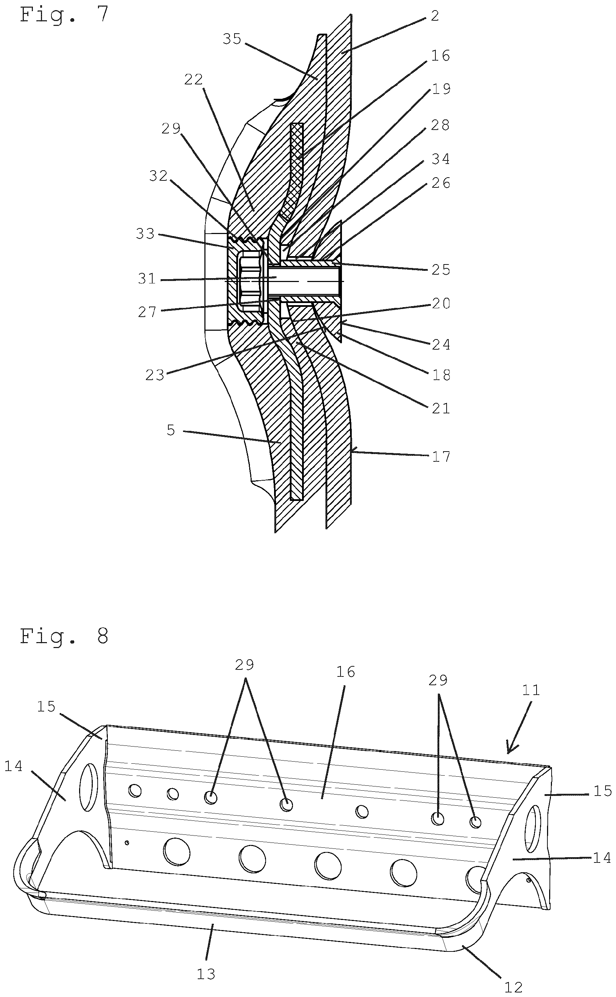

In Fig. 8 ist ein Tragrahmen 11 zu sehen, der sich durch die Rückwand 5, die Seitenwände 6 und die Vorderwand 7 erstreckt. Der Tragrahmen 11 weist einen aus einem Stück U-förmig gebogenen Rahmenteil 12 und eine Tragplatte 16 auf, die miteinander verbunden sind. Grundsätzlich ist es aber natürlich auch möglich, den Tragrahmen 11 aus mehr als zwei Teilen oder aus nur einem einzigen Teil herzustellen.

Der U-förmig gebogene Rahmenteil 12 weist einen Vorderteil 13, der in der Vorderwand 7 aufgenommen ist, und zwei Seitenteile 14, die in den Seitenwänden 6 aufgenommen sind, auf.

An den dem Vorderteil 13 gegenüberliegenden Enden 15 der Seitenteile 14 ist der Rahmenteil 12 mit einer Tragplatte 16 verschweißt. Die Tragplatte 16 ist vorzugsweise (aber natürlich nicht zwingend) höher als der Rahmenteil 12, da er einerseits eine stabile Verbindung des Bechers 1 mit dem Gurt 2 herstellen muss und andererseits eine Verstärkung der Rückwand 5 in dem Bereich bilden kann, in dem sich der Becher 1 bei der Bewegung über die Umlenkrolle 3 am Gurt und der darunterliegenden Umlenkrolle 3 abstützt.

Der Tragrahmen 11 ist in der in den Zeichnungen dargestellten Ausführungsform vollständig in die Wände 5 bis 7 eingegossen, verstärkt diese Wände 5 bis 7 insbesondere im Bereich Ihrer oberen Ränder 8, 9 und 10 und ist vor Verschleiß und Korrosion geschützt.

An der der Rückwand 5 gegenüberliegenden Innenfläche 17 des Gurtes 2 ist wenigstens eine Halterung 18 angeordnet, die mit der Rückwand 5 verschraubt ist. Die Halterung 18 ist im Wesentlichen leistenförmig und erstreckt sich über die gesamte Breite des Bechers 1 und quer zur Bewegungsrichtung des Gurtes 2. Eine einzige beispielsweise plattenförmige Halterung oder zwei oder mehr leistenförmige oder plattenförmige Halterungen, die quer zur Förderrichtung des Gurtes 2 nebeneinander liegen, wären im Rahmen der Erfindung ebenfalls möglich. Zwei oder gegebenenfalls mehr als zwei nebeneinander angeordnete Halterungen 18 bzw. Leisten sind vorteilhaft, weil diese damit auf einfache Weise an die Bombierung an der Trommel angeglichen werden können. Zwischen der Rückwand 5 und der Halterung 18 ist der Gurt 2 aufgenommen.

Die Tragplatte 16 weist eine parallel zur Halterung 18 (quer zur Bewegungsrichtung des Gurtes 2) verlaufende Vertiefung 19 auf. Die Kunststoffschichten 21 und 22, die die Tragplatte 16 auf beiden Seiten umgeben, weisen ebenfalls eine entsprechende Kontur auf, wobei die äußere, dem Gurt 2 zugewandte Kunststoffschicht 21 zur Mitte der Vertiefung 19 hin dünner wird, wogegen die innere, dem Inneren des Bechers 1 zugewandte Kunststoffschicht 22 in diesem Bereich der Rückwand 5 dicker wird. Von der Kunststoffschicht 21 wird daher ebenfalls eine Vertiefung 20 gebildet, die noch tiefer als die Vertiefung 19 in der Tragplatte 16 ist. Diese Änderung im Verlauf der Dicke der Kunststoffschichten 21, 22 ist zwar aus den vorstehend und nachfolgend beschriebenen Gründen vorteilhaft, aber nicht zwingend, und eine beispielsweise konstant bleibende oder gegensätzlich verlaufende Dicke einer oder beider Kunststoffschichten 21, 22 ist ebenso denkbar.

Die Halterung 18 weist auf der dem Becher 1 bzw. der Rückwand 5 zugewandten Seite eine konvex, insbesondere halbkreisförmig, gekrümmte Fläche 23, und eine von der Rückwand 5 abgewandte, ebene Fläche 24 auf. Beispielsweise könnte die Fläche 23 aber auch eben und die Fläche 24 konkav gekrümmt sein.

Die Halterung 18, die Tragplatte 16 und die äußere Kunststoffschicht 21 weisen abgerundete Konturen auf, die im Großen und Ganzen parallel verlaufen, aber nicht vollständig parallel zueinander liegen müssen. Auf diese Weise wird der Gurt 2, wenn er zwischen der Halterung 18 und der Rückwand 5 geklemmt wird, nicht über Ecken und Kanten gebogen, wodurch die Lebensdauer eines Gurtes 2 beträchtlich verlängert werden kann. Eine beispielsweise ebene Rückwand 5 und eine ebenso ebene Fläche 23 an der Halterung 18 sind im Rahmen der Erfindung aber nicht ausgeschlossen.

Die Vertiefung 19 an der Tragplatte 16, die Stärke der äußeren Kunststoffschicht 21 und die Dicke der Halterung 18 sind im Idealfall so auf die Dicke des Gurtes 2 abgestimmt, dass die zur Innenfläche 17 des Gurtes 2 gewandte Fläche 24 der Halterung mit der Innenfläche 17 des Gurtes 2 im Wesentlichen fluchtet oder gegenüber der Innenfläche 17 etwas zurückversetzt ist. Letztere Variante hat den Vorteil, dass die Halterung 18 auch dann nicht über die Innenfläche 17 vorsteht, wenn der Gurt 2 über die kreisförmig gekrümmte Umlenkrolle 3 läuft, wie in Fig. 1 zu sehen ist.

Damit der Gurt 2 zwischen der Rückwand 5 und der Halterung 18 nicht ungleichmäßig geklemmt wird, sind zwischen der Halterung 18 und der Rückwand 5 Abstandhalter angeordnet, die einen definierten Abstand zwischen der Halterung 18 und der Rückwand 5 festlegen.

In der in den Zeichnungen dargestellten, bevorzugten Ausführungsform der Erfindung werden die Abstandhalter von Hülsen 25 mit einem Innengewinde gebildet, die an der Halterung 18 befestigt sind. Die Gewindehülsen 25 sind von der Seite der inneren Fläche 24 in Bohrungen 26 in der Halterung 18 gesteckt, und an dieser vorzugsweise angeschweißt oder mit einem Presssitz befestigt. Sie könnten auch in die Bohrungen 26 eingeschraubt sein.

Die Hülsen 25 liegen mit Ihren Stirnseiten 27 an der Rückwand 5, in der dargestellten Ausführungsform der Erfindung an der Tragplatte 16 der Rückwand 5, an, womit der Abstand zwischen der Halterung 18 und der Rückwand 5 bestimmt wird.

In der in den Zeichnungen dargestellten Ausführungsform der Erfindung ragen die Hülsen 25 durch Öffnungen 28 in der äußeren Kunststoffschicht 21 und liegen an der Tragplatte 16 an, weil diese eine festeren Widerstand als die äußere Kunststoffschicht 21 bietet. Wenngleich die Abstandhalter im Allgemeinen und die Gewindehülsen im Speziellen natürlich auch an der äußeren Kunststoffschicht 21 anliegen könnten, hat die in den Zeichnungen dargestellte Ausführungsform der Erfindung den weiteren Vorteil, dass auch die äußere Kunststoffschicht 21 vor einem zu starken Quetschen geschützt ist, was ebenfalls zum bereits erwähnten Schieflauf des Gurtes 2 führen könnte.

Die Tragplatte 16 hat Öffnungen 29, durch die vom Inneren der Becher 1 her Schrauben 31 gesteckt sind, die in die Gewindehülsen 25 eingeschraubt werden. Durch Anziehen der Schrauben 31 wird der Gurt 2 in die Vertiefung 20 gezogen und der Gurt 2 sowie die äußere Kunststoffschicht 21 werden festgeklemmt, bis die Stirnseiten 27 der Hülsen 25 an der Tragplatte 16 anliegen. Durch den von den Hülsen 25 vorgegebenen Abstand können die Schrauben 31 sehr fest angezogen werden, ohne den Gurt 2 und die Kunststoffschicht 21 zu beschädigen und bereits erwähnten Schieflauf des Gurtes 2 zu riskieren.

Die innere Kunststoffschicht 22 weist Ausnehmungen 32 auf, in denen die Schraubenköpfe der Schrauben 31 aufgenommen sind. Wie bereits beschrieben kann die innere Kunststoffschicht 22 in diesem Bereich etwas stärker sein. Dadurch können die Schraubenköpfe vollständig in den Ausnehmungen 32 Platz finden. Zusätzlich können die Ausnehmungen 32 bei ausreichender Tiefe bzw. Stärke der Kunststoffschicht 22 auch noch durch Stopfen 33 verschlossen sein, um Ablagerungen von Schüttgut zu verhindern und die Schraubenköpfe und die Tragplatte 16 vor Korrosion zu schützen.

Eine alternative, in den Zeichnungen nicht dargestellte Ausführungsform der Erfindung wäre beispielsweise, die Schrauben 31 direkt in Gewindebohrungen an der Halterung 18 einzuschrauben und zwischen der Halterung 18 und der Rückwand 5 Abstandhalter, beispielsweise auf die Schrauben 31 gesteckte Hülsen, zu verwenden.

Die in den Zeichnungen dargestellte Ausführungsform weist allerdings den Vorteil auf, dass die Montage von Bechern 1 am Gurt 2 sehr einfach möglich ist. Neue Becher 1 werden häufig so an einem Gurt 2 montiert, dass der Gurt 2 von den Umlenkrollen 3 abgenommen und auf den Boden gelegt wird. Dann werden die alten Becher 1 abgenommen. Wenn die neuen Becher 1 angeschraubt werden sollen, muss darauf geachtet werden, dass die Halterungen 18 mit ihren Gewindebohrungen exakt unter den Öffnungen 28, 29 in der Rückwand 5 und den Löchern 34 im Gurt 2 positioniert sind und bei der Montage nicht verrutschen, was unter Zeitdruck und rauen Bedingungen vor Ort oft nicht einfach zu bewerkstelligen ist.

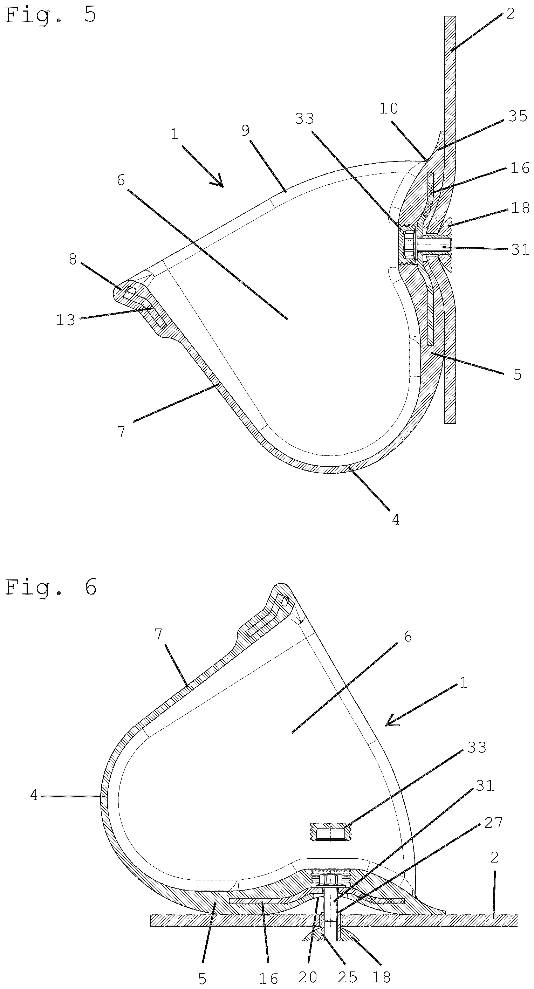

Wenn die die Abstandhalter bildenden Hülsen 25 aber bereits fest an den Halterungen 18 montiert und durch die Löchern 34 im Gurt 2 gesteckt sind, kann können die Halterungen 18 praktisch nicht unter dem Gurt 2 verrutschen, wenn die Becher 1 daraufgelegt und mit den Halterungen 18 verschraubt werden. Diese Situation ist in Fig. 6 dargestellt.

Da zwischen die Becher 1 und den Gurt 2 Schüttgut fallen kann, das auch den Verschleiß des Gurtes 2 erhöht, kann bei der Erfindung im Bereich 10 des oberen Rand der Rückwand 5 eine Dichtlippe 35 angeordnet sein, die vom Becher 1 weg nach oben in Richtung zum Gurt 2 hin gerichtet ist. Idealerweise ist die Dichtlippe 35 so gestaltet, dass sie zumindest in gestreckten Abschnitten des Gurtes 2 am Gurt 2 anliegt, wie z.B. in den Fig. 5 und 6 zu sehen ist. Wenn die Dichtlippe 35 elastisch genug ist, kann sie auch während der Bewegung der Becher 1 um die Umlenkrollen 3 am Gurt 2 anliegen und als Rotationsbremse wirken, wie in Fig. 1 zu sehen ist.

Durch die Kunststoffschicht 21 und die Dichtlippe 35 ist auch das im Stand der Technik übliche Beilegen von Gummiplatten oder zusätzlichen Abstandhaltern zum Schutz vor Beschädigungen des Gurtes 2 durch die Becherrückwand 5 nicht mehr erforderlich.

Wenigstens einer der am Gurt 2 montierten Becher 1 kann als sogenannter Räumbecher ausgeführt werden, der einen am Becher 1 angeschraubten Verschleißrahmen aus Stahl aufweist, der über die durch die Ränder 8, 9 definierten Becherkontur der anderen Becher 1 am Gurt 2 des Becherwerks hinausragt. Mit diesem Räumbecher kann im Räumbereich der Becher 1 liegen gebliebenes und teilweise verdichtetes Schüttgut, das einen erhöhten Verschleiß der Ränder 8, 9 der Becher 1 verursachen würde, gelockert werden.

Der erfindungsgemäße Becher 1 zeichnet sich in seiner bevorzugten Ausführungsform durch eine geringe Anzahl von Bauteilen bei hoher Funktionalität aus:
- der Becher 1 kann aus einem Stück gegossen werden, in den der Tragrahmen 11 eingegossen ist;
- der Tragrahmen 11 kann aus nur zwei Teilen bestehen;
- geringe Schraubenanzahl je nach Bechergröße (bei einer Breite von z.B. 500 mm nur z.B. sechs Stück);
- Schutz der Schrauben und der Tragplatte 16 durch Stopfen 33 entsprechend der Anzahl der Schrauben;
- Besonders einfache Demontage alter und Montage neuer Becher 1 am Gurt 2.

**Bezugszeichenliste:**

| | | | |
|---|---|---|---|
| 1 | Becher | 21 | äußere Kunststoffschicht |
| 2 | Gurt | 22 | innere Kunststoffschicht |
| 3 | Umlenkrolle | 23 | konvexe Fläche |
| 4 | Boden | 24 | ebene Fläche |
| 5 | Rückwand | 25 | Hülsen |
| 6 | Seitenwände | 26 | Bohrungen |
| 7 | Vorderwand | 27 | Stirnseite |
| 8 | Rand/Schürfleiste | 28 | Öffnung |
| 9 | Rand/Schürfleiste | 29 | Öffnung |
| 10 | Randbereich | 30 | --- |
| 11 | Tragrahmen | 31 | Schrauben |
| 12 | Rahmenteil | 32 | Ausnehmungen |
| 13 | Vorderteil | 33 | Stopfen |
| 14 | Seitenteile | 34 | Löcher |
| 15 | Enden der Seitenteile | 35 | Dichtlippe |
| 16 | Tragplatte | | |
| 17 | Innenfläche | | |
| 18 | Halterung | | |
| 19 | Vertiefung | | |
| 20 | Vertiefung | | |

## Patentansprüche

1. Becher für ein Gurtbecherwerk zur Förderung von Schüttgut, der einen Boden (4), eine Rückwand (5), Seitenwände (6) und eine Vorderwand (7) aufweist, wobei der Becher (1) mittels Schrauben (31) durch Öffnungen (28, 29) an der Rückwand (5) und Löcher (34) in einem Gurt (2) des Gurtbecherwerks mit wenigstens einer Halterung (18) verbunden ist, die an der der Rückwand (5) gegenüberliegenden Seite des Gurtes (2) angeordnet ist, **dadurch gekennzeichnet, dass** zwischen der Rückwand (5) und der Halterung (18) ein Abstandhalter angeordnet ist, der den Abstand zwischen der Rückwand (5) und der Halterung (18) definiert.

2. Becher nach Anspruch 1, **dadurch gekennzeichnet, dass** der Becher (1) an der Rückwand (5) eine Tragplatte (16) aufweist, die, vorzugsweise allseits, von Kunststoff umhüllt ist, und dass sich der Abstandhalter an der Tragplatte (16) abstützt.

3. Becher nach Anspruch 1 oder 2, **dadurch gekennzeichnet, dass** alle Wände (5, 6, 7) und der Boden (4) aus, vorzugsweise elastischem, Kunststoff, vorzugsweise Polyurethan, bestehen.

4. Becher nach einem der Ansprüche 1 bis 3, **dadurch gekennzeichnet, dass** die Tragplatte (16) Teil eines Tragrahmens (11) ist, der sich in der Rückwand (5), den Seitenwänden (6) und der Vorderwand (7) erstreckt, und dass der Tragrahmen (11) vorzugsweise allseits von Kunststoff umhüllt ist.

5. Becher nach Anspruch 4, **dadurch gekennzeichnet, dass** der Tragrahmen (11) einen U-förmig gebogenen Rahmenteil (12) aufweist, der sich an oder in den Seitenwänden (6) und der Vorderwand (7) erstreckt, und der mit der Tragplatte (16) verbunden, insbesondere verschweißt, ist.

6. Becher nach einem der Ansprüche 1 bis 5, **dadurch gekennzeichnet, dass** die Rückwand (5) eine der Erstreckung der Halterung (18) entsprechende Vertiefung (19, 20) aufweist, und dass die Halterung (18) und die Tragplatte (16) vorzugsweise eine abgerundete Kontur aufweisen, die im Wesentlichen parallel verlaufen.

7. Becher nach einem der Ansprüche 1 bis 6, **dadurch gekennzeichnet, dass** die Halterung (18) leistenförmig ist und sich quer zur Längserstreckung des Gurtes (2) erstreckt, und vorzugsweise eine der Rückwand (5) zugewandte, konvexe Fläche (23) und eine von der Rückwand (5) abgewandte, ebene Fläche (24) aufweist.

8. Becher nach einem der Ansprüche 1 bis 7, **dadurch gekennzeichnet, dass** die Schrauben (31) von der Innenseite des Bechers (1) her durch Öffnungen (28, 29) an der Rückwand (5) gesteckt und mit der Halterung (18) verschraubt sind.

9. Becher nach Anspruch 8, **dadurch gekennzeichnet, dass** an der Halterung (18) Hülsen (25) mit einem Innengewinde angeordnet, vorzugsweise an der Halterung (18) befestigt, sind, die die Abstandhalter bilden.

10. Becher nach Anspruch 9, **dadurch gekennzeichnet, dass** die Hülsen (25) in Bohrungen (26) in der Halterung (18) aufgenommen sind.

11. Becher nach einem der Ansprüche 7 bis 10, **dadurch gekennzeichnet, dass** die Rückwand (5) im Bereich jeder Öffnung (29) eine Ausnehmung (32) aufweist, in der ein Schraubenkopf der Schraube (31) aufgenommen ist.

12. Becher nach Anspruch 11, **dadurch gekennzeichnet, dass** die Ausnehmungen (32) mit Stopfen (33) verschlossen sind.

13. Gurtbecherwerk mit einem angetriebenen, umlaufenden, endlosen Gurt (2) und daran mittels Schrauben (31) befestigten Bechern (1) zur Förderung von Schüttgut, wobei die Becher (1) einen Boden (4), eine Rückwand (5), Seitenwände (6) und eine Vorderwand (7) aufweisen, wobei die Becher (1) mittels Schrauben (31) durch Öffnungen an der Rückwand (5) und Löcher im Gurt (2) mit einer Halterungen (18) verbunden sind, die an der der Rückwand (5) gegenüberliegenden Seite des Gurtes (2) angeordnet sind, **dadurch gekennzeichnet, dass** die Becher (1) nach einem der Ansprüche 1 bis 12 ausgeführt sind.

14. Gurtbecherwerk nach Anspruch 13, **dadurch gekennzeichnet, dass** in einem oberen Randbereich (10) der Rückwand (5) eine Dichtlippe (35) angeordnet ist, die vom Becher (1) weg nach oben in Richtung zum Gurt (2) hin gerichtet ist.

15. Gurtbecherwerk nach Anspruch 14, **dadurch gekennzeichnet, dass** die Dichtlippe (35) zumindest in gestreckten Abschnitten des Gurtes (2) unter Vorspannung am Gurt (2) anliegt.
